# FASCICULE DE BREVET EUROPEEN

(11) **EP 4 269 768 B1**
(45) Date de publication et mention de la délivrance du brevet: **07.08.2024**
(21) Numéro de dépôt: 23165654.7
(22) Date de dépôt: 30.03.2023
(51) Int. Cl.: F02C 7/224, F02K 1/82

(54) **ENSEMBLE PROPULSIF POUR UN AÉRONEF**
ANTRIEBSEINHEIT FÜR EIN FLUGZEUG
PROPULSION ASSEMBLY FOR AN AIRCRAFT

(30) Priorité: 27.04.2022 FR 2203919
(43) Date de publication de la demande: 01.11.2023
(73) Titulaire: Airbus (S.A.S.), 31700 Blagnac (FR)
(72) Inventeur: CZAPLA, Lionel, 31060 TOULOUSE (FR); DEVASIGAMANI, Nandakumar, 31060 TOULOUSE (FR); CARRETERO BENIGNOS, Jorge A., 82024 TAUFKIRCHEN (DE)
(74) Mandataire: Airbus-OPS SAS

(56) Documents cités:
- US-A- 3 024 606
- US-A1- 2015 000 298
- US-A1- 2020 088 102

## Description

La présente invention concerne un ensemble propulsif pour un aéronef.

Un aéronef comporte classiquement au moins un ensemble propulsif qui comprend un système de propulsion arrangé dans une nacelle. Le système de propulsion comporte un moteur qui entraîne une hélice, non carénée dans le cas d'un turbopropulseur. Le moteur comporte de l'avant vers l'arrière une entrée d'air qui permet l'introduction d'air dans une veine d'air, un compresseur qui comprime l'air ainsi introduit, une chambre de combustion dans laquelle se produit une combustion de l'air ainsi comprimé et d'un carburant, et une turbine qui permet la détente des gaz de combustion et qui génère la rotation qui est transmise à l'hélice pour créer la propulsion. En aval de la turbine, une tuyère d'éjection assure l'éjection des gaz de combustion hors de la nacelle.

Le document US2015/000298 A1 décrit un ensemble propulsif selon le préambule de la revendication 1. Le document US3024606A décrit un ensemble propulsif selon le préambule de la revendication 3.

Il est connu que le rendement de la combustion d'un carburant est amélioré si ce carburant est chauffé, à une température prédéterminée qui dépend du type de carburant utilisé, avant ladite combustion.

Il existe donc un besoin de trouver un système permettant de chauffer le carburant avant son injection dans la chambre de combustion. L'invention vise à répondre en tout ou partie à ce besoin.

À cet effet, est proposé un ensemble propulsif pour un aéronef selon la revendication 1 ou la revendication 3.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- La figure 1 est une vue de côté d'un aéronef comportant un ensemble propulsif selon l'invention,
- La figure 2 est une représentation schématique vue de côté et en coupe d'un ensemble propulsif selon un premier mode de réalisation de l'invention,
- La figure 3 est une représentation schématique vue de côté d'une tuyère d'éjection de l'ensemble propulsif représenté à la figure 2, et
- La figure 4 est une vue en coupe, selon le plan A-A de la tuyère d'éjection représentée à la figure 3, et
- La figure 5 est une représentation schématique vue de côté et en coupe d'un ensemble propulsif selon un second mode de réalisation de l'invention,
- La figure 6 est une représentation schématique vue de côté d'une tuyère d'éjection de l'ensemble propulsif représenté à la figure 5, et
- La figure 7 est une vue en coupe, selon le plan B-B de la tuyère d'éjection représentée à la figure 6.

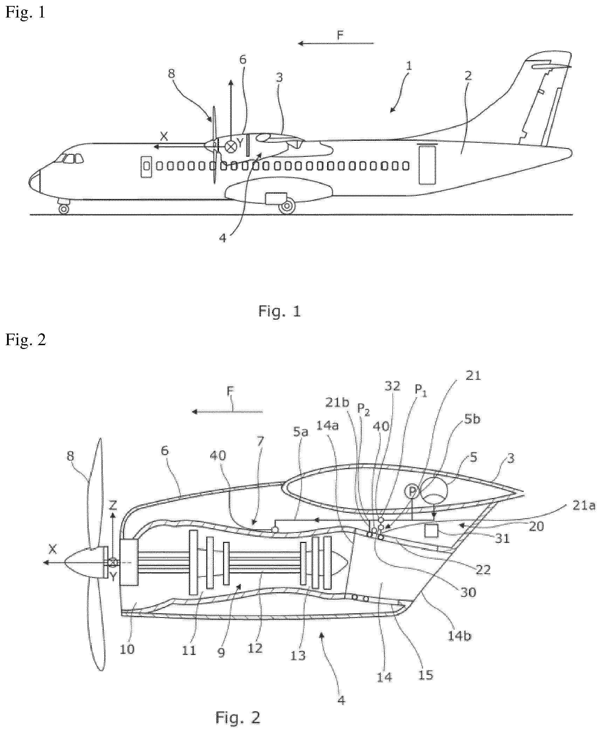

En référence avec les figures 1 et 2, un aéronef 1 comprend un fuselage 2 de part et d'autre duquel est fixée une aile 3. Sous chaque aile 3 est fixé au moins un ensemble propulsif 4. L'aéronef 1 comprend également, un réservoir de carburant 5 (ici arrangé dans l'aile et uniquement visible à la figure 2) connecté à chaque ensemble propulsif 4 au moyen d'une canalisation d'apport 5a formée de conduits mis bout à bout. Le carburant est, par exemple, du kérosène ou du dihydrogène (H₂).

Dans la description qui suit, les termes relatifs à une position sont pris en référence à un aéronef en position d'avancement, c'est-à-dire comme il est représenté sur la figure 1 où la flèche F montre la direction d'avancement de l'aéronef

Dans la description qui suit, et par convention, on appelle X l'axe longitudinal de l'aéronef 1 orienté positivement dans le sens d'avancement de l'aéronef 1, on appelle Y l'axe transversal qui est horizontal lorsque l'aéronef 1 est au sol, et Z l'axe vertical ou hauteur verticale lorsque l'aéronef 1 est au sol, ces trois axes X, Y et Z étant orthogonaux entre eux.

L'ensemble propulsif 4 comprend une nacelle 6 et un système de propulsion 7 entouré par la nacelle 6. Chaque système de propulsion 7 est, ici, de type turbopropulseur avec une hélice 8 non carénée entraînée en rotation par un moteur 9 logé à l'intérieur de la nacelle 6.

Le moteur 9 comprend de l'avant vers l'arrière, une entrée d'air 10 qui communique avec l'extérieur de la nacelle 6 et forme une veine d'air pour permettre l'introduction d'air extérieur à la nacelle 6 vers le moteur 9, un compresseur 11 qui comprime l'air ainsi introduit, une chambre de combustion 12 dans laquelle l'air ainsi comprimé et du carburant se mélangent et brûlent, une turbine 13 qui permet la détente des gaz de combustion et qui génère la rotation qui est transmise à l'hélice 8 et une tuyère d'éjection 14 des gaz de combustion qui est située en aval de la turbine 13 et assure l'éjection des gaz de combustion hors de la nacelle 6.

La tuyère d'éjection 14 est délimitée par une paroi 15 de section radiale courbe, fermée et ne comprenant pas d'angle. La paroi 15 s'étend longitudinalement vers l'extérieur de la nacelle 6 pour l'évacuation des gaz de combustion entre une première extrémité 14a de la tuyère d'éjection dit amont, fixée de manière étanche à la turbine 13 par soudage ou vissage, et une seconde extrémité 14b de la tuyère d'éjection, dite aval, ici située à l'extérieur de la nacelle 6. La paroi 15 de la tuyère d'éjection 14 à une épaisseur constante et de l'ordre de plusieurs centimètres, par exemple cinq centimètres.

L'espace entre la nacelle 6 et le moteur 9 est occupé par divers systèmes permettant d'assurer le fonctionnement du système de propulsion 7. En particulier, la canalisation d'apport 5a qui alimente la chambre de combustion 12 en carburant transite dans cet espace. Une pompe à carburant 5b, connectée à la canalisation d'apport 5a pour mettre en mouvement le carburant du réservoir jusqu'à la chambre de combustion, est également arrangée dans cet espace.

Selon l'invention, l'ensemble propulsif 4 comporte un système d'échangeur thermique 20 dont la tuyère d'éjection 14 forme une partie, afin de chauffer le carburant avant son injection dans la chambre de combustion 12, par échange calorifique entre le carburant transitant dans la canalisation d'apport 4a et les gaz de combustion lors du fonctionnement du moteur 9.

Selon un premier mode de réalisation de l'invention, et en référence avec la figure 2, le système d'échangeur thermique 20 comprend une canalisation de circulation 21 connectée directement à la canalisation d'apport 5a et une portion 22, dite intégrée, de la canalisation de circulation 21 est arrangée dans l'épaisseur de la paroi 15 de la tuyère d'éjection 14.

Dans le détail, la canalisation de circulation 21 comprend une première extrémité connecté en un premier point de piquage P1 à la canalisation d'apport 5a et une seconde extrémité connectée en un second point de piquage P2 à la canalisation d'apport 5a, et où le second point de piquage P2 est situé en aval du premier point de piquage P1 en considérant le sens de circulation du carburant dans la canalisation d'apport sous l'action de la pompe à carburant 5b en fonctionnement. Sous l'effet de la pompe à carburant 5b, une partie du fluide circulant dans la canalisation d'apport 5a pénètre dans la canalisation de circulation 21 par le premier point de piquage P1, et est réintroduite dans la canalisation d'apport 5a, après réchauffement, au niveau du second point de piquage P2.

Le réchauffement du carburant s'effectue donc directement dans la canalisation de circulation 21 au niveau de la tuyère d'éjection 14.

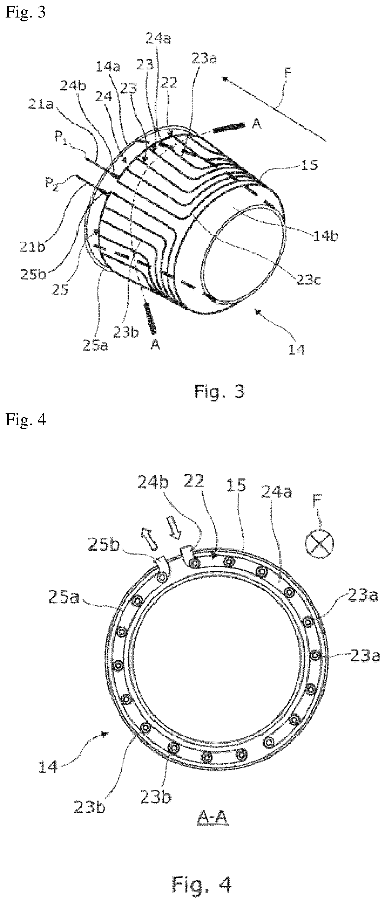

Plus particulièrement visible aux figures 3 et 4, la portion intégrée 22 comprend, intégrés dans l'épaisseur de la paroi 15 de la tuyère d'éjection 14, une pluralité de canaux fluidiques 23, un collecteur d'entrée de fluide 24 et un collecteur de sortie de fluide 25. Chacun des canaux fluidique 23 est connecté d'une part au collecteur d'entrée de fluide 24 lui-même relié à une portion 21a, dite amont, de la canalisation de circulation 21 reliée au premier point de piquage P1, et d'autre part au collecteur de sortie de fluide 25 lui-même relié à une portion 21b, dite aval, de la canalisation de circulation 21 reliée au second point de piquage P2.

Chacun des canaux fluidiques 23 comprend un conduit aller 23a connecté au collecteur d'entrée de fluide 24, un conduit retour 23b collecté au collecteur de sortie de fluide 25 et une portion courbe 23c joignant les conduits aller et retour. Chacun des conduits aller et retour 23a-b s'étend entre la première et la seconde extrémité 14a-b de la tuyère d'éjection. De manière identique pour chacun des canaux fluidiques 23, l'extrémité libre du conduit aller 23a forme une première extrémité du canal fluidique et l'extrémité libre du conduit retour 23b forme une seconde extrémité du canal fluidique.

Le collecteur d'entrée de fluide 24 comprend un conduit nourrice 24a arrangé dans l'épaisseur de la paroi 15 de la tuyère d'éjection et s'étendant longitudinalement de manière courbe dans un plan radial de la paroi 15, et une interface de connexion 24b pour la connexion du conduit nourrice 24a à la portion amont 21a de la canalisation de circulation. Toutes les premières extrémités des canaux fluidiques 23s sont fluidiquement connectées au conduit nourrice 24a.

De manière similaire, le collecteur de sortie de fluide 25 comprend un conduit d'évacuation 25a arrangé dans l'épaisseur de la paroi 15 de la tuyère d'éjection et s'étendant longitudinalement de manière courbe dans un plan radial de la paroi 15, et une interface de connexion 25b pour la connexion du conduit d'évacuation 25a à la portion aval 21b de la canalisation de circulation. Toutes les secondes extrémités des canaux fluidiques 23 sont fluidiquement connectées au conduit d'évacuation 25a.

Chacune des interfaces de connexion 24b,25b d'un collecteur, d'entrée ou de sortie, comprend ici un conduit équipé d'un moyen de raccordement (non représenté) pour la connexion à la portion respectivement amont ou aval de la canalisation de circulation. Le moyen de raccordement est de tout type connu de l'homme du métier, par exemple du type à vissage, pour connecter de manière étanche et démontable des conduits entre eux et permet ainsi le raccordement amovible de la portion amont/aval 21a-b de la canalisation de circulation à l'interface de connexion 24b,25b du collecteur d'entrée de fluide/sortie. Grâce à ces moyens de raccordement, la tuyère d'éjection 14 peut être démontée et remplacée.

Ici, tel que représenté aux figures 3 et 4, l'interface de connexion 24b du collecteur d'entrée de fluide 24 et l'interface de connexion 25b du collecteur de sortie de fluide 25 se situent sur la partie supérieure de la tuyère, à 11h. Les interfaces de connexion 24b,25b des collecteurs d'entrée et de sortie sont situées dans un même plan et toutes deux positionnées au niveau de la première extrémité 14a de la tuyère d'éjection, c'est-à-dire à proximité de la jonction entre la turbine 13 et la tuyère d'éjection 14. L'avantage de cette configuration est de grouper les portions aval et amont 21b,21a de la canalisation de circulation pour minimiser l'encombrement du système d'échangeur thermique 20.

Ici, les canaux fluidiques 23 sont tous situé à un même niveau (par niveau d'un canal fluidique, on entend la distance entre le canal fluidique et la face interne de la paroi 15, la face interne étant au contact des gaz de combustion) dans l'épaisseur de la paroi 15 et les conduits nourrice 24a et d'évacuation 24b sont situés dans un même plan, à proximité de la première extrémité 14a de la tuyère d'éjection 14. Les conduits fluidiques 23 parcourent, dans l'épaisseur de la paroi 15, une boucle allant de la première extrémité 14a à la seconde extrémité 14b en parcourant quasiment tout l'espace entre ces eux extrémités, puis de la seconde extrémité 14b vers la première extrémité 14a de la tuyère d'éjection en parcourant quasiment tout l'espace entre ces deux extrémités. Ainsi, le temps durant lequel un transfert thermique s'opère entre le carburant contenu dans les canaux fluidiques 23 et la paroi chaude 15 est maximisé, et l'efficacité énergétique du système d'échangeur thermique 20 est optimisée. Des configurations différentes sont possibles sans sortir du cadre de l'invention.

Pour prévenir une fuite de carburant au niveau de la portion intégrée de la canalisation de circulation, le système d'échangeur thermique 20 comporte des moyens de détection de fuite 30 prévus au niveau de la portion intégrée 21 et une unité de contrôle 31 connectée aux moyens de détection de fuite 30 (visible à la figure 2). Les moyens de détection de fuite 30 comprennent par exemple deux capteurs de débit et un calculateur permettant de comparer le débit de carburant mesuré par un premier capteur avec le débit mesuré par un second capteur, situé en aval du premier capteur en considérant le sens d'écoulement du carburant dans la portion intégrée. Le système d'échangeur thermique 20 comporte également une vanne 32 à ouverture variable, par exemple de type papillon, montée sur la portion amont 21a de la canalisation de circulation 21 et commandée en ouverture et en fermeture par l'unité de contrôle 31. L'unité de contrôle 31 commande la fermeture de la vanne 32 lorsque les moyens de détection de fuite 30 détectent une fuite de carburant afin de stopper l'arrivée de carburant dans la portion intégrée 22.

En outre, pour maîtriser la température du carburant à l'entrée de la chambre de combustion, le système d'échangeur thermique 20 comporte des capteurs de température du carburant 40 en sortie de la portion intégrée 22 ainsi qu'en entrée de la chambre de combustion 12. L'unité de contrôle 31, connectée aux capteurs de température 40, commande le degré d'ouverture de la vanne 32 afin d'obtenir une température prédéterminée du carburant en entrée de la chambre de combustion 12.

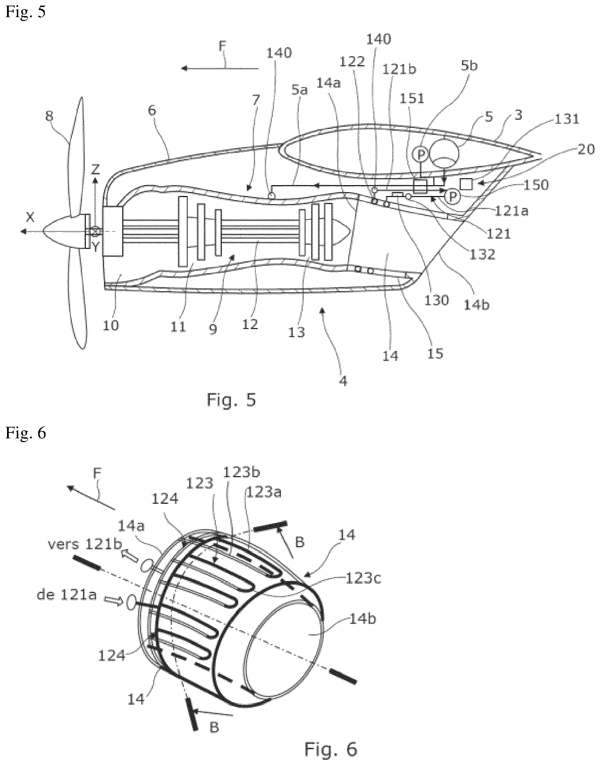

Dans un autre mode de réalisation de l'invention, et en relation avec la figure 5, le système d'échangeur thermique 20 comprend :
- une canalisation de circulation 121 contenant un fluide caloporteur et formant une boucle fermée et dont une portion 122, dite intégrée, est arrangée dans l'épaisseur de la paroi 15 de la tuyère d'éjection 14.
- une pompe de circulation 150 de fluide caloporteur connectée à la canalisation de circulation 121 et arrangée de manière à mettre en mouvement le fluide caloporteur dans la canalisation de circulation 121 selon un sens amont-aval, et ;
- un échangeur thermique fluide-fluide 154, par exemple à contre-courant, en communication fluidique avec la canalisation d'apport 5a et la canalisation de circulation 121 de manière à assurer un transfert de calories du fluide caloporteur chauffé vers le carburant froid, sans mélange des deux fluides.

Ainsi, le réchauffement du carburant s'effectue indirectement par l'intermédiaire d'un fluide caloporteur.

Le fluide caloporteur est ici de l'huile ou tout autre liquide connu pour savoir des propriétés calo-vectrices adaptées à l'effet recherché ici.

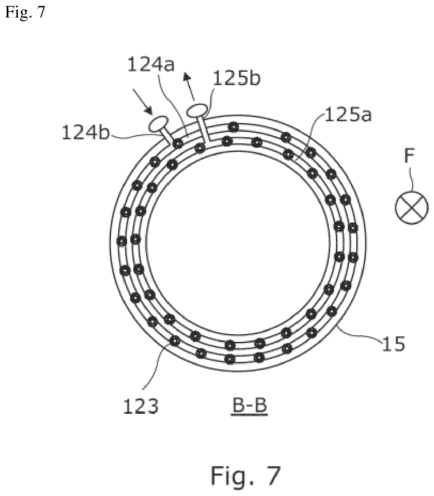

En relation avec les figures 6 et 7, la portion intégrée 122 de la canalisation de circulation comprend, intégrés dans l'épaisseur de la paroi 15 de la tuyère d'éjection 14, une pluralité de canaux fluidiques 123 ainsi qu'un collecteur d'entrée de fluide 124 et un collecteur de sortie de fluide 125. Chacun des canaux fluidiques 123 est connecté d'une part au collecteur d'entrée de fluide 124 lui-même relié à une portion 121a, dite amont, de la canalisation de circulation 121 arrangée en aval de la pompe de circulation de fluide caloporteur 150 en considérant le sens de circulation du fluide caloporteur sous l'effet de ladite pompe, et d'autre part au collecteur de sortie de fluide 125 lui-même relié à une portion 121b, dite aval, de la canalisation de circulation 121 arrangée en amont de la pompe de circulation de fluide caloporteur 150. L'échangeur thermique fluide-fluide 154 est arrangé sur la portion aval 121b de la canalisation de circulation 121 et reçoit le fluide caloporteur chaud qui se refroidit (par échange de calorie avec le carburant de la canalisation d'apport 5a) lors de son passage dans l'échangeur thermique fluide-fluide 154 pour être ensuite introduit dans la pompe de circulation de fluide caloporteur 150.

Chacun des canaux fluidiques 123 comprend un conduit aller 123a connecté au collecteur d'entrée de fluide 124, un conduit retour 123b connecté au collecteur de sortie de fluide 125 et une portion courbe 123c joignant les conduits aller et retour. Chacun des conduits aller-retour 123a-b s'étend dans une direction allant de l'extrémité avant 14a vers l'extrémité arrière 14b de la tuyère. De manière identique pour chacun des canaux fluidiques 123, l'extrémité libre du conduit aller 123a forme une première extrémité du canal fluidique 123 et l'extrémité libre du conduit retour 123b forme une seconde extrémité du canal fluidique 123.

Le collecteur d'entrée de fluide 124 comprend un conduit nourrice 124a arrangé dans l'épaisseur de la paroi 15 de la tuyère d'éjection 14 et s'étendant longitudinalement de manière courbe dans un plan radial de la paroi 15, et une interface de connexion 124b pour la connexion du conduit nourrice 124a à la portion amont 121a de la canalisation de circulation. Toutes les premières extrémités des canaux fluidiques 123 sont fluidiquement connectées au conduit nourrice 124a.

De manière similaire, le collecteur de sortie de fluide 125 comprend un conduit d'évacuation 125a arrangé dans l'épaisseur de la paroi 15 de la tuyère d'éjection 14 et s'étendant longitudinalement de manière courbe dans un plan radial de la paroi 125, et une interface de connexion 125b pour la connexion du conduit d'évacuation 125a à la portion aval 121b de la canalisation de circulation. Toutes les secondes extrémités des canaux fluidiques 123 sont fluidiquement connectées au conduit d'évacuation 125a.

Chacun des interfaces de connexion d'un collecteur 124b, 125b, que ce soit pour le collecteur d'entrée de fluide ou le collecteur de sortie de fluide, comprend ici un conduit équipé d'un moyen de raccordement (non représenté) pour la connexion à la portion respectivement amont ou aval de la canalisation de circulation. Le moyen de raccordement est de tout type connu de l'homme du métier, par exemple de type à vissage, pour connecter de manière étanche et démontable des conduits entre eux et permet ainsi le raccordement amovible de la portion amont/aval 121a,b de la canalisation de circulation à l'interface de connexion du collecteur d'entrée de fluide/sortie 124b, 125b. Grâce à ces moyens de raccordement, la tuyère d'éjection 14 peut être démontée et remplacée.

Ici, comme représenté aux figures 6 et 7, et pour s'assurer d'avoir un encombrement réduit du système d'échangeur thermique 20 dans la nacelle, l'interface de connexion du collecteur d'entrée de fluide et l'interface de connexion du collecteur de sortie de fluide 124b, 125b sont situés toutes deux à proximité l'une de l'autre, par exemple toutes les deux dans la partie haute de la tuyère d'éjection 14, à 11H. D'autres configurations sont possibles en fonction de l'espace alloué au système d'échangeur thermique 20 dans la nacelle.

Ici, les conduits nourrice et d'évacuation sont situés dans des plans légèrement décalés l'un de l'autre par rapport à l'axe longitudinal X et les interfaces de connexion des collecteurs d'entrée et de sortie sont également décalées l'une de l'autre.

En outre, les canaux fluidiques 123 sont empilés dans l'épaisseur de la paroi 15 pour maximiser le nombre de conduits 123 arrangés dans la paroi. Plus précisément, les conduits aller 123a des canaux fluidiques et le conduit nourrice 124a sont situés à un même niveau dans l'épaisseur de la paroi 15 mais sont arrangés au-dessus des conduits retour 123b des canaux fluidiques et du conduit d'évacuation 125a qui sont eux situés à un même niveau. Ici, les conduits retour 123b et le conduit d'évacuation 125a sont arrangés au plus près de la face interne de la tuyère d'éjection 14. Le fluide caloporteur circulant dans les canaux fluidiques 123 est ainsi chauffé en bénéficiant du maximum d'intensité du rayonnement thermique juste avant sa sortie de la portion intégrée 122.

D'autres configurations sont possibles sans sortir du cadre de l'invention.

Pour prévenir une fuite de liquide caloporteur au niveau de la portion intégrée 122 de la canalisation de circulation 121, le système d'échangeur thermique 20 comporte des moyens de détection de fuite 130 prévus au niveau de la portion intégrée 122 et une unité de contrôle 131 connectée aux moyens de détection de fuite 130. Les moyens de détection de fuite 130 comprennent par exemple deux capteurs de débit et un calculateur permettant de comparer le débit de fluide caloporteur mesuré par un premier capteur avec le débit mesuré par un second capteur, situé en aval du premier capteur en considérant le sens d'écoulement du fluide caloporteur dans la portion intégrée 122. Le système d'échangeur thermique 20 comporte également une vanne 132 à ouverture variable, par exemple de type papillon, montée ici sur la portion amont 121a de la canalisation de circulation 121 et commandée en ouverture et en fermeture par l'unité de contrôle 131. L'unité de contrôle commande la fermeture de la vanne 132 lorsque les moyens de détection de fuite détectent une fuite de liquide caloporteur.

En outre, pour maîtriser la température du carburant à l'entrée de la chambre de combustion 12, le système d'échangeur thermique 20 comporte des capteurs de température 140 pour mesurer la température du fluide caloporteur en sortie de la portion intégrée 122 ainsi que pour mesurer la température du carburant en entrée de la chambre de combustion 12. L'unité de contrôle 131 commande le degré d'ouverture de la vanne 132 en fonction des températures mesurées pour obtenir une température désirée du carburant en entrée de la chambre de combustion 12.

De manière identique à tous les modes de réalisation, la tuyère d'éjection 14 est, par exemple, réalisée par une technique d'impression 3D avec un matériau métallique comme matière première. Ce mode de fabrication permet d'adapter la section des canaux fluidique 23,123 en fonction des caractéristiques du fluide qui y transite pour diminuer les pertes de charges lors de la circulation du fluide. Les canaux ont, par exemple, une section oblongue, circulaire, ou encore triangulaire.

## Revendications

1. Ensemble propulsif (4) pour un aéronef comprenant une nacelle (6) et un moteur (9) arrangé à l'intérieur de la nacelle (6) et alimenté en carburant par une canalisation d'apport (5a) en carburant, le moteur (9) comportant une chambre de combustion (12) et, en aval de ladite chambre, une tuyère d'éjection (14) des gaz de combustion hors de la nacelle, la tuyère d'éjection (14) étant délimitée par une paroi (15) de section radiale courbe, fermée et sans angle, la tuyère d'éjection (14) s'étendant longitudinalement entre une première extrémité (14a) et une seconde extrémité (14b), l'ensemble propulsif (4) comprenant en outre un système d'échangeur thermique (20) dont la tuyère d'éjection (14) forme une partie, le système d'échangeur thermique (20) comprenant une canalisation de circulation (21) dont une portion (22), dite intégrée, est arrangée dans l'épaisseur de la paroi (15) de la tuyère d'éjection (14), une première extrémité de la canalisation de circulation (21) étant connecté en un premier point de piquage (P1) à la canalisation d'apport (5a) et une seconde extrémité de la canalisation de circulation (21) étant connectée en un second point de piquage (P2) à la canalisation d'apport (5a), le second point de piquage (P2) étant situé en aval du premier point de piquage (P1) en considérant le sens de circulation du carburant dans la canalisation d'apport (5a), **caractérisé en ce que** le système d'échangeur thermique (20) comprend des moyens de détection de fuite (30, 130) configurés pour détecter une fuite du fluide hors de la canalisation de circulation (21, 121), une unité de contrôle (31, 131) connectée aux moyens de détection de fuite (30, 130), et une vanne (32, 132) à ouverture variable montée sur la canalisation de circulation (21, 121) et commandée en ouverture et en fermeture par l'unité de contrôle (31, 131).

2. Ensemble propulsif (4) selon la revendication 1, **caractérisé en ce que** la portion intégrée (22) comprend une pluralité de canaux fluidiques (23) arrangés dans l'épaisseur de la paroi (15), un collecteur d'entrée de fluide (24) et un collecteur de sortie de fluide (25), où chacun des canaux fluidiques (23) est connecté d'une part au collecteur d'entrée de fluide (24) lui-même relié à une portion (21a), dite amont, de la canalisation de circulation reliée au premier point de piquage (P1), et d'autre part au collecteur de sortie de fluide (25) lui-même relié à une portion (21b), dite aval, de la canalisation de circulation reliée au second point de piquage (P2).

3. Ensemble propulsif (4) pour un aéronef comprenant une nacelle (6) et un moteur (9) arrangé à l'intérieur de la nacelle (6) et alimenté en carburant par une canalisation d'apport (5a) en carburant, le moteur (9) comportant une chambre de combustion (12) et, en aval de ladite chambre, une tuyère d'éjection (14) des gaz de combustion hors de la nacelle, la tuyère d'éjection (14) étant délimitée par une paroi (15) de section radiale courbe, fermée et sans angle, la tuyère d'éjection (14) s'étendant longitudinalement entre une première extrémité (14a) et une seconde extrémité (14b), l'ensemble propulsif (4) comprenant en outre un système d'échangeur thermique (20) dont la tuyère d'éjection (14) forme une partie, le système d'échangeur thermique (20) comprenant une canalisation de circulation (121) dont une portion (122), dite intégrée, est arrangée dans l'épaisseur de la paroi (15) de la tuyère d'éjection (14), la canalisation de circulation (121) formant une boucle fermée et contenant un fluide caloporteur, et en ce que le système d'échangeur thermique (20) comprend en outre une pompe de circulation de fluide caloporteur (150) connectée à la canalisation de circulation (121) et configurée, en fonctionnement, pour mettre en mouvement le fluide caloporteur dans la canalisation de circulation (121) dans un sens amont-aval, et un échangeur thermique (151) en communication fluidique avec la canalisation d'apport (5a) et la canalisation de circulation (121), **caractérisé en ce que** le système d'échangeur thermique (20) comprend des moyens de détection de fuite (30, 130) configurés pour détecter une fuite du fluide hors de la canalisation de circulation (21, 121), une unité de contrôle (31, 131) connectée aux moyens de détection de fuite (30, 130), et une vanne (32, 132) à ouverture variable montée sur la canalisation de circulation (21, 121) et commandée en ouverture et en fermeture par l'unité de contrôle (31, 131).

4. Ensemble propulsif (4) selon la revendication 3, **caractérisé en ce que** la portion intégrée (122) comprend une pluralité de canaux fluidiques (123) arrangés dans l'épaisseur de la paroi (15) de la tuyère d'éjection (15), un collecteur d'entrée de fluide (124) et un collecteur de sortie de fluide (125), et où chacun des canaux fluidiques (123) est connecté d'une part au collecteur d'entrée de fluide (124) lui-même relié à une portion (121a), dite amont, de la canalisation de circulation arrangée en aval de la pompe de circulation de fluide caloporteur (150) en considérant le sens de circulation du liquide caloporteur dans la canalisation de circulation (121), et d'autre part au collecteur de sortie de fluide (125) lui-même relié à une portion (121b), dite aval, de la canalisation de circulation (121) arrangée en amont de la pompe de circulation de fluide caloporteur (150).

5. Ensemble propulsif (4) selon la revendication 2 ou la revendication 4, **caractérisé en ce que** chacun des canaux fluidiques (23, 123) comprend un conduit aller (23a, 123a) connecté au collecteur d'entrée de fluide (24, 124), un conduit retour (23b, 123b) connecté au collecteur de sortie de fluide (25, 125), et une portion courbe (23c, 123c) joignant les conduits aller et retour et **en ce que** chacun des conduits aller-retour (23a-b, 123a-b) s'étend entre la première extrémité et la seconde extrémité (14a,14b) de la tuyère d'éjection (14).

6. Ensemble propulsif (4) selon la revendication 5, **caractérisé en ce que** le collecteur d'entrée de fluide (24, 124) comprend un conduit nourrice (24a, 124a) arrangé dans l'épaisseur de la paroi (15) de la tuyère d'éjection (14) et auquel les conduits aller (23a, 123a) des canaux fluidiques (23, 123) sont tous connectés, le conduit nourrice (24a, 124a) s'étendant longitudinalement de manière courbe dans un plan radial de ladite paroi (15), et **en ce que** le collecteur d'entrée de fluide (24, 124) comprend également une interface de connexion (24b, 124b) pour la connexion du conduit nourrice (24a, 124a) à la portion amont (21a, 121a) de la canalisation de circulation.

7. Ensemble propulsif selon la revendication 6, **caractérisé en ce que** le collecteur de sortie de fluide (25, 125) comprend un conduit d'évacuation (25a, 125a) arrangé dans l'épaisseur de la paroi (15) de la tuyère d'éjection (14) et auquel les conduits retour (23b, 123b) des canaux fluidiques (23, 123) sont tous connectés, le conduit d'évacuation (25a, 125a) s'étendant longitudinalement de manière courbe dans un plan radial de ladite paroi (15), et **en ce que** le collecteur de sortie de fluide (25, 125) comprend également une interface de connexion (25b, 125b) pour la connexion du conduit d'évacuation (25a, 125a) à la portion aval (21b, 121b) de la canalisation de circulation.

8. Ensemble propulsif (4) selon la revendication 1 ou la revendication 3, **caractérisé en ce que** le système d'échangeur thermique (20) comprend des capteurs de température (40, 140) pour mesurer la température du fluide en sortie de la portion intégrée (22, 122) ainsi que pour mesurer la température du carburant en entrée de la chambre de combustion (12), l'unité de contrôle (31, 131) étant configurée pour commander un degré d'ouverture de la vanne (32, 132) en fonction des températures mesurées.

## Patentansprüche

1. Antriebseinheit (4) für ein Luftfahrzeug, umfassend eine Gondel (6) und ein Triebwerk (9), das innerhalb der Gondel (6) angeordnet ist und über eine Treibstoffversorgungsleitung (5a) mit Treibstoff versorgt wird, wobei das Triebwerk (9) eine Brennkammer (12) und stromabwärts der Kammer eine Düse (14) zum Ausstoßen der Verbrennungsgase aus der Gondel aufweist, wobei die Ausstoßdüse (14) durch eine Wand (15) mit einem gekrümmten, geschlossenen und winkelfreien radialen Querschnitt begrenzt ist, wobei sich die Ausstoßdüse (14) in Längsrichtung zwischen einem ersten Ende (14a) und einem zweiten Ende (14b) erstreckt, wobei die Antriebseinheit (4) ferner ein Wärmetauschersystem (20) umfasst, von dem die Ausstoßdüse (14) einen Teil bildet, wobei das Wärmetauschersystem (20) eine Zirkulationsleitung (21) umfasst, von der ein sogenannter integrierter Abschnitt (22) in der Dicke der Wand (15) der Ausstoßdüse (14) angeordnet ist, wobei ein erstes Ende der Zirkulationsleitung (21) an einer ersten Entnahmestelle (P1) mit der Versorgungsleitung (5a) verbunden ist und ein zweites Ende der Zirkulationsleitung (21) an einer zweiten Entnahmestelle (P2) mit der Versorgungsleitung (5a) verbunden ist, wobei sich die zweite Entnahmestelle (P2) stromabwärts der ersten Entnahmestelle (P1), bezogen auf die Zirkulationsrichtung des Treibstoffs in der Versorgungsleitung (5a), befindet, **dadurch gekennzeichnet, dass** das Wärmetauschersystem (20) Folgendes umfasst: Leckerkennungsmittel (30, 130), die dazu konfiguriert sind, ein Fluidleck aus der Zirkulationsleitung (21, 121) zu detektieren, eine mit den Leckerkennungsmitteln (30, 130) verbundene Steuereinheit (31, 131) und ein Ventil (32, 132) mit variabler Öffnung, das an der Zirkulationsleitung (21, 121) montiert ist und dessen Öffnen und Schließen durch die Steuereinheit (31, 131) gesteuert wird.

2. Antriebseinheit (4) nach Anspruch 1, **dadurch gekennzeichnet, dass** der integrierte Abschnitt (22) Folgendes umfasst: eine Vielzahl von Fluidkanälen (23), die in der Dicke der Wand (15) angeordnet sind, einen Fluideingangsverteiler (24) und einen Fluidausgangsverteiler (25), wobei jeder der Fluidkanäle (23) einerseits mit dem Fluideingangsverteiler (24) verbunden ist, der seinerseits mit einem sogenannten stromaufwärtigen Abschnitt (21a) der Zirkulationsleitung verbunden ist, der mit der ersten Entnahmestelle (P1) verbunden ist, und andererseits mit dem Fluidausgangsverteiler (25) verbunden ist, der seinerseits mit einem sogenannten stromabwärtigen Abschnitt (21b) der Zirkulationsleitung verbunden ist, der mit der zweiten Entnahmestelle (P2) verbunden ist.

3. Antriebseinheit (4) für ein Luftfahrzeug, umfassend eine Gondel (6) und ein Triebwerk (9), das innerhalb der Gondel (6) angeordnet ist und durch eine Treibstoffversorgungsleitung (5a) mit Treibstoff versorgt wird, wobei das Triebwerk (9) eine Brennkammer (12) und stromabwärts der Kammer eine Düse (14) zum Ausstoßen der Verbrennungsgase aus der Gondel aufweist, wobei die Ausstoßdüse (14) durch eine Wand (15) mit einem gekrümmten, geschlossenen und winkelfreien radialen Querschnitt begrenzt ist, wobei sich die Ausstoßdüse (14) in Längsrichtung zwischen einem ersten Ende (14a) und einem zweiten Ende (14b) erstreckt, wobei die Antriebseinheit (4) ferner ein Wärmetauschersystem (20) umfasst, von dem die Ausstoßdüse (14) einen Teil bildet, wobei das Wärmetauschersystem (20) eine Zirkulationsleitung (121) umfasst, von der ein sogenannter integrierter Abschnitt (122) in der Dicke der Wand (15) der Ausstoßdüse (14) angeordnet ist, wobei die Zirkulationsleitung (121) eine geschlossene Schleife bildet, die ein Wärmeträgerfluid enthält, und dadurch, dass das Wärmetauschersystem (20) ferner Folgendes umfasst: eine Wärmeträgerfluidzirkulationspumpe (150), die mit der Zirkulationsleitung (121) verbunden und dazu konfiguriert ist, im Betrieb das Wärmeträgerfluid in der Zirkulationsleitung (121) in eine Stromaufwärts-Stromabwärts-Richtung zu bewegen, und einen Wärmetauscher (151), der mit der Versorgungsleitung (5a) und der Zirkulationsleitung (121) in Fluidverbindung steht, **dadurch gekennzeichnet, dass** das Wärmetauschersystem (20) Folgendes umfasst: Leckerkennungsmittel (30, 130), die dazu konfiguriert sind, ein Fluidleck aus der Zirkulationsleitung (21, 121) zu detektieren, eine mit den Leckerkennungsmitteln (30, 130) verbundene Steuereinheit (31, 131) und ein Ventil (32, 132) mit variabler Öffnung, das an der Zirkulationsleitung (21, 121) montiert ist und dessen Öffnen und Schließen durch die Steuereinheit (31, 131) gesteuert wird.

4. Antriebseinheit (4) nach Anspruch 3, **dadurch gekennzeichnet, dass** der integrierte Abschnitt (122) Folgendes umfasst: eine Vielzahl von Fluidkanälen (123), die in der Dicke der Wand (15) der Ausstoßdüse (15) angeordnet sind, einen Fluideingangsverteiler (124) und einen Fluidausgangsverteiler (125), und wobei jeder der Fluidkanäle (123) einerseits mit dem Fluideingangsverteiler (124) verbunden ist, der seinerseits mit einem sogenannten stromaufwärtigen Abschnitt (121a) der Zirkulationsleitung verbunden ist, der stromabwärts der Wärmeträgerfluidzirkulationspumpe (150), bezogen auf die Zirkulationsrichtung der Wärmeträgerflüssigkeit in der Zirkulationsleitung (121), angeordnet ist, und andererseits mit dem Fluidausgangsverteiler (125) verbunden ist, der seinerseits mit einem sogenannten stromabwärtigen Abschnitt (121b) der Zirkulationsleitung (121) verbunden ist, der stromaufwärts der Wärmeträgerfluidzirkulationspumpe (150) angeordnet ist.

5. Antriebseinheit (4) nach Anspruch 2 oder Anspruch 4, **dadurch gekennzeichnet, dass** jeder der Fluidkanäle (23, 123) Folgendes umfasst: eine mit dem Fluideingangsverteiler (24, 124) verbundene Vorlaufleitung (23a, 123a), eine mit dem Fluidausgangsverteiler (25, 125) verbunden Rücklaufleitung (23b, 123b) und einen gekrümmten Abschnitt (23c, 123c), der die Vorlaufleitung und die Rücklaufleitung verbindet, und dass sich sowohl die Vorlaufleitung als auch die Rücklaufleitung (23a-b, 123a-b) zwischen dem ersten Ende und dem zweiten Ende (14a, 14b) der Ausstoßdüse (14) erstrecken.

6. Antriebseinheit (4) nach Anspruch 5, **dadurch gekennzeichnet, dass** der Fluideingangsverteiler (24, 124) eine Zufuhrleitung (24a, 124a) umfasst, die in der Dicke der Wand (15) der Ausstoßdüse (14) angeordnet ist und mit der alle Vorlaufleitungen (23a, 123a) der Fluidkanäle (23, 123) verbunden sind, wobei sich die Zufuhrleitung (24a, 124a) in einer radialen Ebene der Wand (15) gekrümmt in Längsrichtung erstreckt, und dass der Fluideingangsverteiler (24, 124) außerdem eine Verbindungsschnittstelle (24b, 124b) zur Verbindung der Zufuhrleitung (24a, 124a) mit dem stromaufwärtigen Abschnitt (21a, 121a) der Zirkulationsleitung umfasst.

7. Antriebseinheit nach Anspruch 6, **dadurch gekennzeichnet, dass** der Fluidausgangsverteiler (25, 125) eine Abfuhrleitung (25a, 125a) umfasst, die in der Dicke der Wand (15) der Ausstoßdüse (14) angeordnet ist und mit der alle Rücklaufleitungen (23b, 123b) der Fluidkanäle (23, 123) verbunden sind, wobei sich die Abfuhrleitung (25a, 125a) in einer radialen Ebene der Wand (15) gekrümmt in Längsrichtung erstreckt, und dass der Fluidausgangsverteiler (25, 125) außerdem eine Verbindungsschnittstelle (25b, 125b) zur Verbindung der Abfuhrleitung (25a, 125a) mit dem stromabwärtigen Abschnitt (21b, 121b) der Zirkulationsleitung umfasst.

8. Antriebseinheit (4) nach Anspruch 1 oder Anspruch 3, **dadurch gekennzeichnet, dass** das Wärmetauschersystem (20) Temperatursensoren (40, 140) zum Messen der Fluidtemperatur am Ausgang des integrierten Abschnitts (22, 122) und zum Messen der Treibstofftemperatur am Eingang der Brennkammer (12) umfasst, wobei die Steuereinheit (31, 131) dazu konfiguriert ist, einen Öffnungsgrad des Ventils (32, 132) in Abhängigkeit von den gemessenen Temperaturen zu steuern.

## Claims

1. Propulsion assembly (4) for an aircraft comprising a nacelle (6) and an engine (9) arranged inside the nacelle (6) and supplied with fuel by a fuel supply line (5a), the engine (9) comprising a combustion chamber (12) and, downstream of said chamber, an exhaust nozzle (14) for ejecting the combustion gases out of the nacelle, the exhaust nozzle (14) being delimited by a closed and angle-free wall (15) of curved radial cross section, the exhaust nozzle (14) extending longitudinally between a first end (14a) and a second end (14b), the propulsion assembly (4) further comprising a heat exchanger system (20) of which the exhaust nozzle (14) forms a part, the heat exchanger system (20) comprising a circulation line (21) of which a portion (22), termed integrated portion, is arranged within the thickness of the wall (15) of the exhaust nozzle (14), a first end of the circulation line (21) being connected at a first tapping point (P1) to the supply line (5a), and a second end of the circulation line (21) being connected at a second tapping point (P2) to the supply line (5a), the second tapping point (P2) being situated downstream of the first tapping point (P1) when considering the direction of circulation of the fuel in the supply line (5a), **characterized in that** the heat exchanger system (20) comprises leak-detection means (30, 130) configured to detect a leak of the fluid out of the circulation line (21, 121), a control unit (31, 131) connected to the leak-detection means (30, 130), and a variable-opening valve (32, 132) mounted on the circulation line (21, 121) and controlled to open and close by the control unit (31, 131).

2. Propulsion assembly (4) according to Claim 1, **characterized in that** the integrated portion (22) comprises a plurality of fluid channels (23) arranged within the thickness of the wall (15), a fluid inlet manifold (24) and a fluid outlet manifold (25), wherein each of the fluid channels (23) is connected, on the one hand, to the fluid inlet manifold (24), itself connected to a portion (21a), termed upstream portion, of the circulation line that is connected to the first tapping point (P1), and, on the other hand, to the fluid outlet manifold (25), itself connected to a portion (21b), termed downstream portion, of the circulation line that is connected to the second tapping point (P2).

3. Propulsion assembly (4) for an aircraft comprising a nacelle (6) and an engine (9) arranged inside the nacelle (6) and supplied with fuel by a fuel supply line (5a), the engine (9) comprising a combustion chamber (12) and, downstream of said chamber, an exhaust nozzle (14) for ejecting the combustion gases out of the nacelle, the exhaust nozzle (14) being delimited by a closed and angle-free wall (15) of curved radial cross section, the exhaust nozzle (14) extending longitudinally between a first end (14a) and a second end (14b), the propulsion assembly (4) further comprising a heat exchanger system (20) of which the exhaust nozzle (14) forms a part, the heat exchanger system (20) comprising a circulation line (121) of which a portion (122), termed integrated portion, is arranged within the thickness of the wall (15) of the exhaust nozzle (14), the circulation line (21) forming a closed loop and containing a heat-transfer fluid, and in that the heat exchanger system (20) further comprises a heat-transfer fluid circulation pump (150) connected to the circulation line (121) and configured, in operation, to move the heat-transfer fluid in the circulation line (21) in an upstream-downstream direction, and a heat exchanger (151) in fluidic communication with the supply line (5a) and the circulation line (121), **characterized in that** the heat exchanger system (20) comprises leak-detection means (30, 130) configured to detect a leak of the fluid out of the circulation line (21, 121), a control unit (31, 131) connected to the leak-detection means (30, 130), and a variable-opening valve (32, 132) mounted on the circulation line (21, 121) and controlled to open and close by the control unit (31, 131).

4. Propulsion assembly (4) according to Claim 3, **characterized in that** the integrated portion (122) comprises a plurality of fluid channels (123) arranged within the thickness of the wall (15) of the exhaust nozzle (15), a fluid inlet manifold (124) and a fluid outlet manifold (125), and wherein each of the fluid channels (123) is connected, on the one hand, to the fluid inlet manifold (124), itself connected to a portion (121a), termed upstream portion, of the circulation line that is arranged downstream of the heat-transfer fluid circulation pump (150) when considering the direction of circulation of the heat-transfer liquid in the circulation line (121), and, on the other hand, to the fluid outlet manifold (125), itself connected to a portion (121b), termed downstream portion, of the circulation line (121) that is arranged upstream of the heat-transfer fluid circulation pump (150).

5. Propulsion assembly (4) according to Claim 2 or Claim 4, **characterized in that** each of the fluid channels (23, 123) comprises an outbound duct (23a, 123a) connected to the fluid inlet manifold (24, 124), a return duct (23b, 123b) connected to the fluid outlet manifold (25, 125), and a curved portion (23c, 123c) joining the outbound and return ducts, and **in that** each of the outbound-return ducts (23a-b, 123a-b) extends between the first end and the second end (14a, 14b) of the exhaust nozzle (14).

6. Propulsion assembly (4) according to Claim 5, **characterized in that** the fluid inlet manifold (24, 124) comprises a feed duct (24a, 124a) arranged within the thickness of the wall (15) of the exhaust nozzle (14) and to which the outbound ducts (23a, 123a) of the fluid channels (23, 123) are all connected, the feed duct (24a, 124a) extending longitudinally in a curved manner in a radial plane of said wall (15), and **in that** the fluid inlet manifold (24, 124) also comprises a connection interface (24b, 124b) for connecting the feed duct (24a, 124a) to the upstream portion (21a, 121a) of the circulation line.

7. Propulsion assembly according to Claim 6, **characterized in that** the fluid outlet manifold (25, 125) comprises a discharge duct (25a, 125a) arranged within the thickness of the wall (15) of the exhaust nozzle (14) and to which the return ducts (23b, 123b) of the fluid channels (23, 123) are all connected, the discharge duct (25a, 125a) extending longitudinally in a curved manner in a radial plane of said wall (15), and **in that** the fluid outlet manifold (25, 125) also comprises a connection interface (25b, 125b) for connecting the discharge duct (25a, 125a) to the downstream portion (21b, 121b) of the circulation line.

8. Propulsion assembly (4) according to Claim 1 or Claim 3, **characterized in that** the heat exchanger system (20) comprises temperature sensors (40, 140) for measuring the temperature of the fluid at the outlet of the integrated portion (22, 122) and also for measuring the temperature of the fuel at the inlet of the combustion chamber (12), the control unit (31, 131) being configured to command a degree of opening of the valve (32, 132) according to the temperatures measured.
